# EUROPEAN PATENT APPLICATION

(11) **EP 1 711 021 A1**
(43) Date of publication of application: **11.10.2006**
(21) Application number: 06075449.6
(22) Date of filing: 28.02.2006
(51) Int. Cl.: H04N 9/31, H01J 61/00, G03B 21/20

(54) **Improved single light value projection device and method for projecting images**

(30) Priority: 15.03.2005 US 79275
(71) Applicant: Barco, naamloze vennootschap., 8500 Kortrijk (BE)
(72) Inventor: Gerets, Peter, 8800 Roeselare (BE); Coulier, Nico, 9870 Zulte (BE)
(74) Representative: Donné, Eddy

(57) **Abstract**

An improved single light valve projection device comprising: a metal halide lamp which is driven by a direct current (DC); a relay-optic, consisting of an optical assembly; a single light valve element; a rotating color wheel which is positioned in between said metal halide lamp and the relay-optic and which color wheel contains at least two different color filters; means for realizing at regular time intervals a boost of the current through the metal halide lamp and means for synchronizing the rotational speed of said color wheel, with the sequence of generating the different color components by the light valve element, such that the passing of a specific color filter between said metal halide lamp and said relay-optic coincides with said boost of the current through the metal halide lamp and with the projection of the corresponding image component by the light valve element.

## Description

### BACKGROUND OF THE INVENTION

### 1. Field of the invention

The present invention relates to an improved single light valve projection device, such as a single chip projection device.

A single chip projection device consists of a lamp and a reflector and an optical assembly called the relay optic, which takes in the light of the lamp-reflector combination.

The output of the relay optic is cast into a prism called the "total internal reflection prism" (TIR-prism) which casts the light coming from the lamp onto a light valve element, such as a "digital mirror device" (DMD).

Said DMD reflects the light according to the digital pattern which is programmed on it (e.g. a video image signal) and reflects this light pattern back into the TIR-prism which guides the light on its turn back through the projection-lens optics and onto a screen.

In between the lamp and the relay-optic, a rotating color wheel is positioned which contains color filters, for example a red, green and blue (RGB) filter.

Since a colored video-image is constructed by means of, for example, red, green and blue components and there is only a single light valve element, the combination of the color wheel and the light valve element uses the latency of the viewers eye to recombine the RGB-components of the image on screen.

The rotation of the color wheel is synchronized with the RGB-sequence on the light valve element.

When the light valve element represents the red part of the image, the wheel filters the light of the lamp with a red filter, only casting red light on the valve element and thus projecting the information of the red components of the image on the screen. Same goes for the green and blue components, resulting in the fully composed colored image by sequencing the color information. This process is called color sequencing.

### 2. Discussion of the Related Art

Up to now, for such single light valve projection devices, use is made of ultra high pressure (UHP) lamps which have an ultra high pressure whilst burning.

Such UHP lamps, which are very compact, have a pure Mercury filling and are driven by means of an alternating current (AC).

A disadvantage of such UHP lamps is that they are limited in power and have a low light output.

To have a higher light output on any light valve projection devices, xenon lamps are generally used.

These are high pressure lamps which are driven by means of a direct current.

The disadvantages of such xenon lamps are their size, the fact that they are quite expensive and that they are placed under a high pressure in non-operating condition, which makes these xenon lamps difficult to be used for a compact single chip light valve projection device.
Another type of lamp, which can be used for such light valve projection devices is an alternating current metal halide lamp.

Such an alternating current metal halide lamp comprises a glass bulb with an arc-chamber, wherein two electrodes are provided at a distance from each other, defining a gap there between, and a combination of Mercury and a cocktail of heavy metals, inside said glass bulb.

These lamps have a low pressure in non-operating condition, which makes them safe to handle.

A drawback of using such alternating current metal halide lamps is that such lamps are characterized by a relative long arc with two alternating hot spots far from each other, which implicates that the light emitted by such an alternating current metal halide lamp is spread over a relatively big surface, thereby lowering the brightness of the emitted light as single light valves are relatively small.

### SUMMARY OF THE INVENTION

The present invention aims at an improved single light valve projection device which does not show the above mentioned and other disadvantages.

To this aim the present invention concerns an improved single light valve projection device comprising a metal halide lamp which is driven by a direct current; a relay-optic, consisting of an optical assembly; a single light valve element; a rotating color wheel which is positioned in between said metal halide lamp and the relay-optic and which color wheel contains at least two different color filters; means for realizing at regular time intervals a boost of the current through the metal halide lamp and means for synchronizing the rotational speed of said color wheel, with the sequence of generating the different color components by the light valve element, such that the passing of a specific color filter between said metal halide lamp and said relay-optic coincides with said boost of the current through the metal halide lamp and with the projection of the corresponding image component by the light valve element.

This allows to boost the light output whilst one of the colored filters of the color wheel passes, resulting in a change of the color temperature of the light output of the projection device, depending on the color of the filter when the boost is operated and on the strength of the boost.

This is particularly advantageous, for example when using UHP lamps which show a lack of red, in which case the drive current through the lamp can be boosted whilst the red filter is passing.

In a preferred form of embodiment of a single light valve projection device according to the invention at least one of said color filters is a white filter and the passing of said white filter between said metal halide lamp and said relay-optic is synchronized with said boost of the current through the metal halide lamp and with the projection of the white image component by the light valve element.

Such an improved single light valve projection device makes it possible to combine a safe direct current metal halide lamp with a high overall on screen light output of the projection device for projection applications as it permits to increase the light output by pulsing the power of the DC driven metal halide lamp during the passing of the white filter between said metal halide lamp and said relay optic.

Indeed, the metal halide lamp is driven by direct current, which results in an arc with only one hotspot at an electrode of the lamp, resulting in a higher light output, as such a DC metal halide lamp requires only half the power of an AC metal halide lamp for realizing the same light output.

According to the invention, at regular times, a boost in the power, and more specific in the drive current through the lamp, is applied, resulting in a peak of the light output.

By means of said synchronization means the rotational speed of the color wheel is synchronized with the frequency of said boost of the direct drive current of the lamp, in such a manner that the timing of the boost of the current, the moment of the projection of a white image component and the moment of the passing of the white color filter in front of said metal halide lamp are synchronized, thereby temporarily increasing the light output of the lamp, and increasing the overall light output of the device.

The invention also relates to a method of projecting images by means of a single light valve projection device comprising a lamp; a relay-optic, consisting of an optical assembly; a single light valve element; a rotating color wheel which is positioned in between said lamp and the relay-optic and which color wheel contains at least two different color filters, wherein said method provides for using a metal halide lamp which is driven by a direct current and wherein the method comprises the step of applying a regular boost in the drive current through said lamp and of synchronizing the passing of a specific color filter between said metal halide lamp and said relay-optic with said boost of the drive current through the metal halide lamp and with the projection of the corresponding image component by the light valve element.

### BRIEF DESCRIPTION OF THE DRAWINGS

With the intention of better showing the characteristics of the invention, hereafter, as an example without any restrictive character, several preferred forms of embodiment are described, as well as a method of projecting images by means of such an improved single light valve projection device, with reference to the accompanying drawings, wherein:
figure 1 schematically represents an improved single light valve projection device according to the invention;
figure 2 represents the relationship between the frequency of the boost in the power supply of the metal halide lamp and the rotational speed of the color wheel.

### DESCRIPTION OF A PREFERED EMBODIMENT

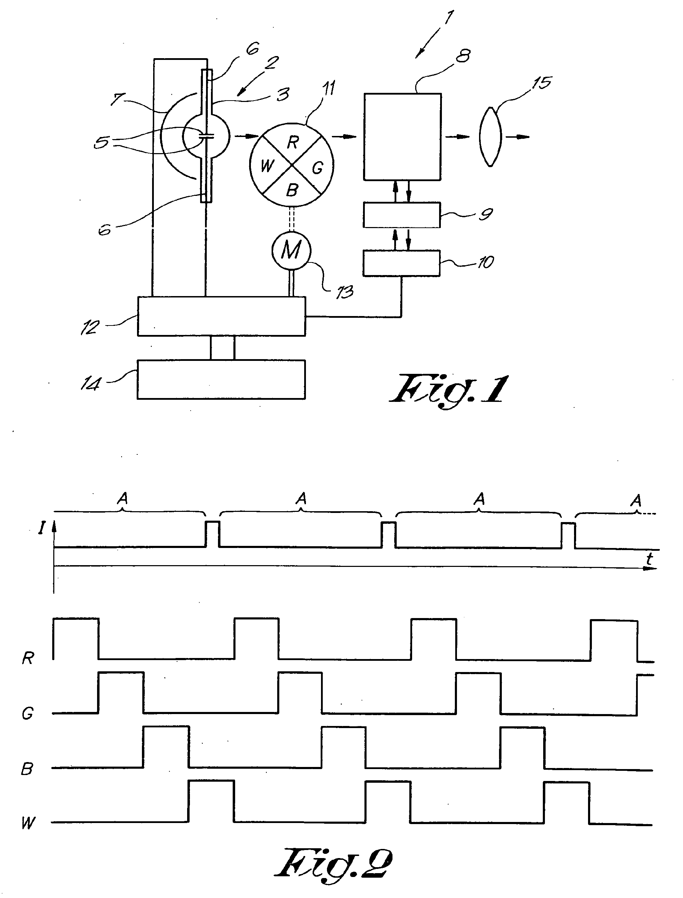

Figure 1 schematically represents an improved single light valve projection device 1 which comprises a casing which is not represented and in which a metal halide lamp 2 is provided.

Said lamp 2 is mainly build-up in a traditional manner and comprises a glass bulb 3 which encloses an arc-chamber 4 and two electrodes 5 which are placed in said arc-chamber 4 at a distance from each other, defining a gap there between. In said bulb 3 a metal halide gas, such as for example Mercury halide, is provided.

Each electrode 5 is provided with connection means in the form of an electric conductor 6 which extends outside said bulb 3.

Behind said lamp 2 a concave mirror 7 is placed.

Said single light valve projection device 1 further comprises a relay-optic 8, which has been schematically represented in figure 1 and which consists of an optical assembly, such as a plurality of lenses, filters or other optical elements.

In this case, said device 1 comprises a total internal reflection (TIR) prism 9 and a single light valve element 10, for example in the form of a digital mirror device (DMD).

Between said relay-optic 8 and said lamp 2 a rotating color wheel 11 is provided which contains at least two different color filters and, in this case, contains a red, a green, a blue and a white (RGBW) filter. These filters are realized in such a way that, for example, the red filter only lets the red light through, while accordingly the green, the blue and the white filter, respectively let the green, the blue and the white light through.

According to the invention, a single light valve projection device 1 is provided with means for realizing at regular time intervals a boost of the direct drive current I through the metal halide lamp 2.

Further said single light valve projection device 1 is provided with synchronization means 12 for synchronizing the rotational speed of said color wheel 11 with the frequency of the boost in the drive current I of said metal halide lamp 2 and with the sequence of generating the different color components by the light valve element 10.

In this case, said means for generating regular boosts in the power supply to the lamp 2 are incorporated in said synchronization means 12.

Said synchronization means 12 are connected to the conductors 6 of said lamp 2 to a drive motor 13 for the rotating color wheel 11 and to said light valve element 10.

Further, said synchronization means 12 are connected to a power supply 14, for example in the form of an alternating current source or the like.

Preferably behind said relay-optic 8 a lens 15 is placed, however, such lens 15 can also be incorporated in said relay-optic 8.

The functioning of an improved single light valve projection device 1 is rather simple and as follows.

The power supply 14 feeds the synchronization means 12, which on its turn provide a direct current I to said electrodes 5 of said lamp 2, via said conductors 6.

Due to ionization of the metal halide inside the bulb 3, arcing occurs between the electrodes 5, leading to a light output.

At regular time intervals, the drive current I through the metal halide lamp 2 is boosted by means of said means for realizing a boost in the drive current, leading to a periodical increased light output of said lamp 2, which light is projected through said rotating color wheel 11, which is synchronized with the boost of said drive current I of the metal halide lamp 2, as shown in figure 2.

To this aim the synchronization means 12 synchronize the frequency of the boost in the drive current I of the metal halide lamp 2 and the rotational speed of the drive motor 13 of said color wheel 11 which is for example frequency driven.

According to the invention the synchronization between the color wheel 11 and the boost in the drive current I of the metal halide lamp 2 is realized in such a way that, the white filter passes between the relay-optic 8 and the lamp 2 at the moment of the boost in the drive current I through the lamp 2.

After passing through said filter, the light is taken in by the relay-optic 8, which in turn casts the light into the TIR-prism 9 which projects the light on the light valve element 10.

This light valve element 10 is synchronized with the frequency of the boosts in the drive current I of the lamp 2 by the synchronization means 12, in order to obtain that this light valve element 10 projects the white image at the time of the boost of the drive current I, and the passing of the white filter between said lamp 2 and said relay-optic 8.

Due to the increased light output at the time of the passing of the white filter in front of the lamp 2 and the projecting of the white image at this exact time, this leads to an overall increased light output of the projection device 1.

The light signal is reflected into the TIR-prism 9 and back into the relay-optic 8, which finally casts the light through a projection lens 15 which projects the light onto a screen, a wall or any other medium suitable to be used for this aim.

Between two consecutive boosts in the drive current I of the lamp 2, there is a time interval A where the light output is reduced compared to the moment of the boosts of the drive current I.

During these intervals A, the red, green and blue filter pass between the metal halide lamp 2 and the relay-optic 8 and the light valve element 10 represents, respectively, the red, green and blue parts of the image.

Since a colored video-image is constructed by means of red, green and blue components and there is only a single light valve element 10, the combination of the color wheel 11 and the light valve element 10 uses the latency of the viewer's eye to recombine the RGB-components of the image on the screen, resulting in fully composed colored images by sequencing the color information.

In this form of embodiment of an improved single light valve projection device 1 according to the invention said metal halide lamp 2 is a Mercury halide lamp. It is not excluded to use other types of metal halide lamps.

According to the invention any number of color filters can be provided on said color wheel 11, for example, showing an RGBWRGBW-sequence clockwise. An important advantage of such a variant is that said color wheel 11 can rotate at half speed with respect to said first form of embodiment, which in this case means that the color wheel 11 can rotate at the same frequency as the frequency of the boost in the drive current I of the lamp 2.

According to the invention, it is also possible to provide said color wheel 11 with one or more cyan, magenta, yellow and white filters (CMYW), whilst said light valve element generates the color components for the cyan, magenta, yellow and white image respectively and whereby also the white light output is boosted at regular time intervals.

In a particular form of embodiment, said drive motor 13 is coupled to said color wheel 11 by means of a transmission. This permits to let the motor 13 or the color wheel 11 to rotate at a reduced rotational speed.

According to the invention, it is also possible to boost the drive current I of the lamp 2 whilst one of the colored filters of the color wheel 11 passes through the light beam.

As a result thereof, the color temperature of the light output of the projection device 1 will be changed, depending on the color of the filter when the boost is operated and on the strength of the boost.

This might be advantageous for example when using UHP lamps which show a lack of red, in which case the lamp can be boosted whilst the red filter is passing.

It is clear that the present invention is not restricted to the use of a reflective light valve element, but that also usa can be made of a transmittive light valve element.

The present invention is in no way limited to the embodiments described above and represented in the drawings, but such an improved single light valve projection device and a method of projecting images by means of such an improved single light valve projection device, may be realized in different ways, without departure from the scope of the invention.

## Claims

1. An improved single light valve projection device comprising: a metal halide lamp which is driven by a direct current (DC); a relay-optic, consisting of an optical assembly; a single light valve element; a rotating color wheel which is positioned in between said metal halide lamp and the relay-optic and which color wheel contains at least two different color filters; means for realizing at regular time intervals a boost of the current through the metal halide lamp and means for synchronizing the rotational speed of said color wheel, with the sequence of generating the different color components by the light valve element, such that the passing of a specific color filter between said metal halide lamp and said relay-optic coincides with said boost of the current through the metal halide lamp and with the projection of the corresponding image component by the light valve element.

2. The improved single light valve projection device as claimed in claim 1, wherein at least one of said color filters is a white filter and wherein the passing of said white filter between said metal halide lamp and said relay-optic is synchronized with said boost of the current through the metal halide lamp and with the projection of the white image component by the light valve element.

3. The improved single light valve projection device as claimed in claim 2, wherein said color wheel contains at least four different color filters.

4. The improved single light valve projection device as claimed in claim 3, wherein said color wheel is provided with at least one red, one green, one blue and one white filter.

5. The improved single light valve projection device as claimed in claim 3, wherein said color wheel is provided with at least one cyan, one magenta, one yellow and one white filter.

6. The improved single light valve projection device as claimed in claim 1, wherein said light valve element consists of a digital mirror device.

7. The improved single light valve projection device as claimed in claim 1, wherein said color wheel is provided with driving means in the form of an electric motor.

8. The improved single light valve projection device as claimed in claim 7, wherein said electric motor is frequency driven.

9. The improved single light valve projection device as claimed in claim 1, wherein between said relay optic and said light valve element a total internal reflection (TIR) prism is provided.

10. A method of projecting images by means of a single light valve projection device comprising a lamp; a relay-optic, consisting of an optical assembly; a single light valve element; a rotating color wheel which is positioned in between said lamp and the relay-optic and which color wheel contains at least two different color filters, wherein said method provides for using a metal halide lamp which is driven by a direct current and wherein the method comprises the step of applying a regular boost in the drive current through said lamp and of synchronizing the passing of a specific color filter between said metal halide lamp and said relay-optic with said boost of the drive current through the metal halide lamp and with the projection of a corresponding image component by the light valve element.

11. The method as claimed in claim 10, wherein at least one of said filters is a white filter and wherein said boost of the drive current is synchronized with the passing of said white color filter between said metal halide lamp and said relay-optic and with the projection of the white image component by the light valve element.

12. The method as claimed in claim 10, wherein use is made of a filter which is provided with a red, a green, a blue and a white filter.

13. The method as claimed in claim 10, wherein use is made of a filter which is provided with a cyan, a magenta, a yellow and a white filter.
